# EUROPEAN PATENT APPLICATION

(11) **EP 2 352 104 A1**
(43) Date of publication of application: **03.08.2011**
(21) Application number: 09821584.1
(22) Date of filing: 19.10.2009
(51) Int. Cl.: G06F 17/30

(54) **METHOD AND DEVICE FOR LOADING WEB PAGE**

(30) Priority: 21.10.2008 CN 200810224605
(71) Applicant: Huawei Device Co., Ltd., Shenzhen, Guangdong 518129 (CN)
(72) Inventor: SUN, Zengcai, Shenzhen Guangdong 518129 (CN)
(74) Representative: Barth, Stephan Manuel
(86) International application number: PCT/CN2009/074504
(87) International publication number: WO 2010/045863

(57) **Abstract**

A The present invention discloses a web page loading method and apparatus. The method includes: judging whether there is parsed data matching resources to the loaded; and if there is parsed data matching the resources to be loaded, loading the parsed data directly. Through the sharing of parsed data, the present invention prevents repeated parsing of shared resources and thereby shortens the loading time, increases the loading speed, and reduces the memory occupancy.

## Description

This application claims priority to Chinese Patent Application No. 200810224605.3, filed with the Chinese Patent Office on October 21 2008 and entitled "Web Page Loading Method and Apparatus", which is incorporated herein by reference in its entirety.

### Field of the Invention

The present invention relates to computer technologies, and in particular, to a web page loading method and apparatus.

### Background of the Invention

Since the 1990s, as web related technologies are gradually mature, information resources on the World Wide Web (WWW) have been growing explosively with a huge quantity of web pages. Web pages fall into two types according to how they are generated. One type is static web page, the content of which is stored on the storage media in the form of files and transferred to a client with no change when a server responds to a request of the client. The other type is dynamic web page, the content of which is generated through the execution of a certain program logic when the server responds to the request of a client.

In the early days of the Internet, the static web page was the main form in use. Since the end of the 1990s, web page script technologies have become increasingly mature so that the application of dynamic web pages is wider and wider. Nowadays, the pages of most websites are generated through dynamic web page technologies. The same content is often generated on large quantities of such dynamic web pages during a period of time or the content generated on different web pages are identical. The program logics that generate the same web page content, however, are always executed in response to each user request, so that large quantities of computing resources are wasted. Web page caching based on original files can somehow relieve the waste and enable terminals to access web pages faster.

With the rapid development of the Internet, especially Web 2.0, browser-based applications are richer and richer. Embedded devices such as Internet Protocol Television (IPTV) set top boxes, Digital Television (DTV) set top boxes, and video telephones, and even other intelligent home electrical devices also provide access to Internet information. The browser plays a more and more important role. At present, most browsers have performance problems. The opening of web pages is slow, especially for embedded terminals, because embedded terminals have limited memory and other resources and are unable to provide satisfactory response speeds during the interaction with a user. To speed up web page browsing and further improve the user experience, the prior art generally makes improvements in three aspects:
1. optimizing the web server and web page content;
2. increasing network bandwidth; and
3. improving the operating performance of the client browser.

Through practicing, the inventor discovers at least the following issue in the prior art. As the server hardware and software are mature, the web server responds increasingly faster, so that the increase of network bandwidth is no longer a bottleneck for the performance of a web browser. The optimization of web page content and the performance improvement of the client browser, on the other hand, become more and more important. In particular, an embedded terminal requires the browser to occupy a smaller memory space but respond faster in interactive experiences. The universal browser has become an operating environment and platform for applications. A lot of universal JavaScript class libraries and JavaScript packages have emerged and occupied more and more memory spaces. Moreover, the current browsers are managed based on pages. As a result, the loading of every page consumes many resources.

### Summary of the Invention

Embodiments of the present invention provide a web page loading method and apparatus, which can shorten the time of page loading, increase the loading speed, and reduce the memory occupancy.

The technical solution of embodiments of the present invention is implemented as follows:
A web page loading method includes:
   judging whether there is parsed data matching resources to be loaded; and if there is parsed data matching the resources to be loaded, loading the parsed data directly.
A web page loading apparatus includes:
   a judging unit, configured to judge whether there is parsed data matching resources to be loaded; and
   a loading unit, configured to load the parsed data if the judging unit determines that there is parsed data matching the resources to be loaded; or load parsed data generated by a parsing unit if the judging unit determines that there is no parsed data matching the resources to be loaded.

Through the sharing of parsed data, the technical solution of the embodiments of the present invention prevents repeated parsing of shared resources and thereby shortens the loading time, increases the loading speed, and reduces the memory occupancy.

### Brief Description of the Drawings

FIG. 1 illustrates sharing of resources between different web pages;
FIG. 2 illustrates multiple tabs of a browser;
FIG. 3 is a flowchart of web page loading;
FIG. 4 is a flowchart of a web page loading method according to a first embodiment of the present invention;
FIG. 5 illustrates the reference to a same software library by multiple web applications; and
FIG. 6 illustrates a structure of a web page loading apparatus according to a first embodiment of the present invention.

### Detailed Description of the Embodiments

To better explain the purpose, technical solution and benefits of the present invention, the embodiments of the present invention are hereinafter described in detail with reference to the accompanying drawings.

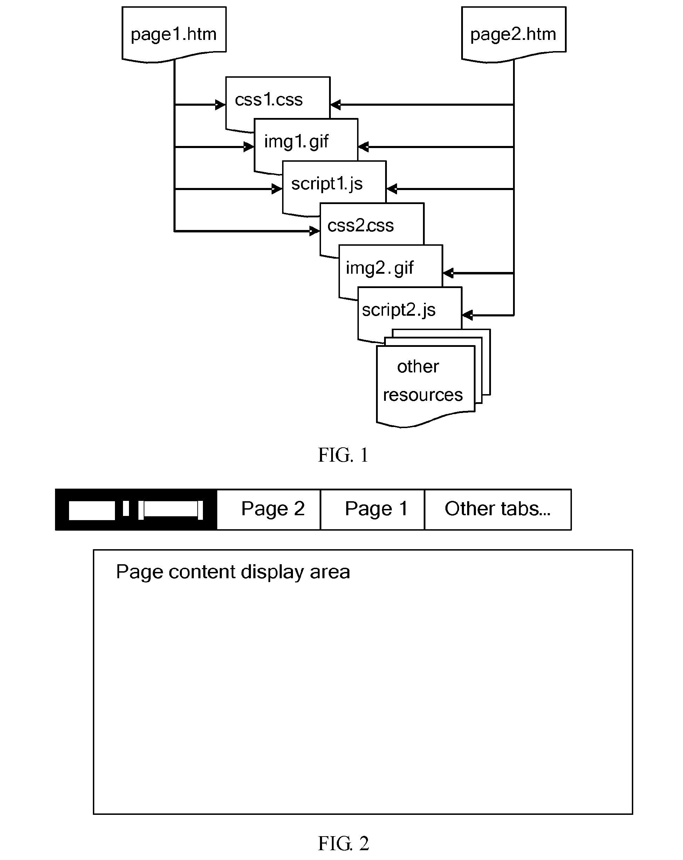

According to analysis of web page characteristics and browsing habits, a user generally switches between multiple pages on one website for several times. Some content of multiple pages may have changed, but it is possible that common resources are referenced by different pages. As shown in FIG. 1, page 1 and page 2 that have different content both reference the resource files css1.css, img1.gif and script1.js.

If a browser supports multiple tabs, it is possible that the user accesses the same page on different tabs of the browser, or that multiple pages reference the same resource files, such as JavaScript, Cascading Style Sheet (CSS), and picture files. As shown in FIG. 2, the browser displays multiple tabs, where page 1, page 2, page 1 and other pages are opened. Two same pages, that is, Page 1 are opened on two of the tabs, and different pages such as page 1 and page 2 share certain content, as shown in FIG. 1.

These pages and resource content can be shared. A prior art provides sharing based on original files, which reduces the requests for access to the server through a local cache. The solution based on the caching of original files helps to reduce the time for server access. The effect is obvious especially in terrible network environments. The caching of original files consumes many memory resources. For an embedded terminal, memory resources are precious. In addition, every attempt of loading requires parsing based on the original files and requires the terminal to execute many operations. The parsing and operations are time consuming and as a result, the loading speed cannot be further improved.

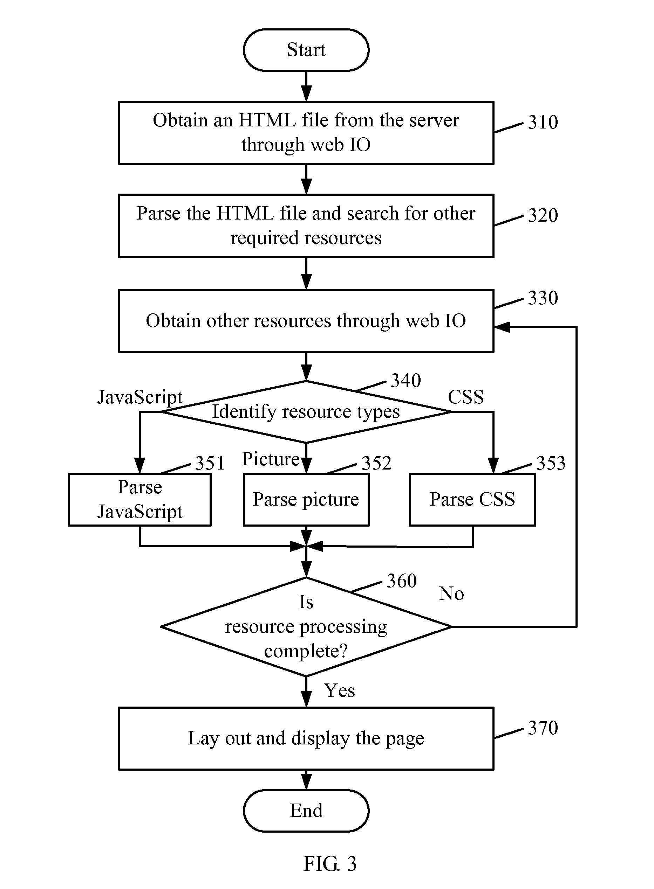

To better explain the technical solution of the embodiments of the present invention, the web page loading procedure of a browser is described. Normally, a page includes the Hypertext Markup Language (HTML), JavaScript, CSS, pictures, JavaScript Object Notation (JSON), and Extensible Markup Language (XML) files. When the browser loads a page, the browser must obtain the files (such as HTTP files or HTTPS files, in which HTTP is short for Hyper Text Transport Protocol) through web Input/Output (IO), parse the files, optionally load other resources such as pictures, CSS and JavaScript files, parse the pictures, CSS and JavaScript files, execute the JavaScript files, and lay out and display the web page; later, during interactions with the user, the browser repeats all or part of the steps. As shown in FIG. 3, the web page loading procedure includes the following steps:
Step 310: Obtain an HTML file from the server through web IO.
Step 320: Parse the HTML file and search for other required resources.
Step 330: Obtain other required resources through web IO.
Step 340: Identify a resource type.
Step 350: Parse the resources.
Step 350 (not shown in FIG. 3) includes three parts. When the resource type is JavaScript file, step 351 is executed to parse the JavaScript file; when the resource type is picture, step 352 is executed to parse the picture file; when the resource type is CSS, step 353 is executed to parse the CSS file.
Step 360: Judge whether the processing of all resources is complete and if so, proceed to the next step, and if the processing of all resources is not complete, go back to step 330. Step 360 is optional. In practice, it is unnecessary to wait for the complete loading of all resources before the page is laid out and displayed. The judgment in the embodiment of the present invention, such as in step 360, describes only a simple mode of loading.
Step 370: Lay out and display the page.

The page loading procedure varies in different browsers. The parsing, loading, layout, and display may be parallel. This means, step 370 is executed simultaneously with other steps.

After the HTML and CSS files are parsed, tree-shaped memory data structures are formed, where the memory data structure formed after parsing of the HTML file is known as a Document Object Model (DOM) tree. Parsing a picture forms the parsed RGBA bitmap data of the picture, in which RGBA is short for Red Green Blue and Alpha which are the three primary colors with transparency and the bitmap data can be displayed directly after the picture is parsed. The layout and display refer to calculating the display position of each element based on the DOM tree and save the information on corresponding nodes in the DOM tree data structure. Parsing a JavaScript file forms a syntactic data structure or further, generates a virtual instruction bytecode.

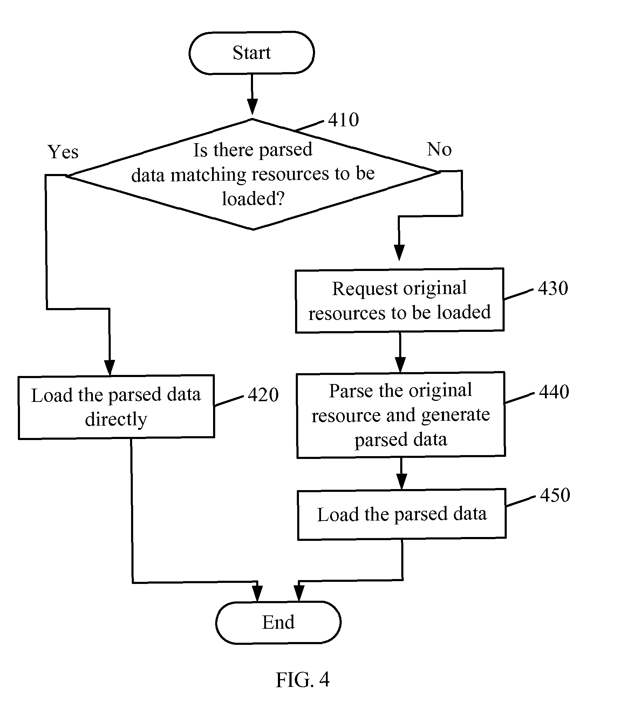

FIG. 4 illustrates the procedure of a web page loading method according to an embodiment of the present invention. The procedure includes the following steps:
Step 410: Judge whether there is already parsed data matching the resources to be loaded. If there is already parsed data, proceed to step 420. If there is no parsed data, go to step 430.

From the above description, after original resource files are transferred from the server to a client, the files cannot be loaded directly but must be parsed by the client before they are loaded. For example, parsing HTML and CSS files forms tree-shaped memory data structures; parsing a picture forms the parsed RGBA bitmap data of the picture; and parsing a JavaScript file forms a syntactic data structure or further, generates a virtual instruction bytecode.
Step 420: Load the parsed data directly.

If two pages share certain content, such as pictures and CSS files, the matched parsed data is loaded directly. Parsing of these resources is not required and therefore system resources are saved.
Step 430: Request original resources to be loaded.

If no content is shared between the pages, the pages are loaded by using a procedure according to the prior art. The client requests resource files from the server through web IO.
Step 440: Parse the original resources to generate parsed data and proceed to step 450.
Step 450: Load the parsed data.

To better explain the benefits of the embodiment of the present invention, content sharing on different occasions is described.

When different pages share a same DOM tree formed after the parsing of a same HTML file, memory resources consumed for access to one page or different pages that embed one page are reduced. This prevents a repeated parsing step and therefore shortens the loading time and increases the loading speed.

When different pages share the data structure formed after the parsing of a same CSS file, a repeated parsing step is prevented, which shortens the loading time, increases the loading speed, and reduces the memory occupancy.

When different pages share the bitmap data formed after the parsing of a same picture, a repeated parsing step is prevented, which shortens the loading time, increases the loading speed, and reduces the memory occupancy. Because the parsed data of a picture generally uses a large memory space, the effect of saving memory resources is obvious.

When different pages share the syntactic tree and/or instruction bytecode formed after the parsing of a same JavaScript file, a repeated parsing step is prevented, which shortens the loading time, increases the loading speed, and reduces the memory occupancy. The parsing of a JavaScript file is slow and the JavaScript file is not altered by other scripts. Therefore, the speed of page loading is effectively improved. In addition, nowadays, JavaScript packages are more and more complex and occupy significant memory resources. Through the sharing, the memory occupancy based on web applications is greatly reduced.

From the above description about the technical solution and benefits of the present invention, it is known that, in the embodiment of the present invention, the sharing of parsed data prevents repeated parsing of shared resources and thereby, shortens the loading time, increases the loading speed, and reduces the memory occupancy.

A web page loading method according to another embodiment of the present invention includes all the steps in the foregoing embodiment and additionally the following step after the parsed data is generated:
Store the parsed data.
Storing the parsed data increases the amount of parsed data in the memory and thereby increases the shared hit rate.

For an embedded terminal, memory resources are limited. If all memory resources are used, a new page cannot be opened. Therefore, it is impossible to store unlimited parsed data. It is necessary to find a balance between the shared hit rate and the memory occupancy. In this embodiment of the present invention, the parsed data stored in the memory is prioritized, where different priorities are set based on the elements concerned. For example, the priority of parsed data may be set based on the number of references, the size of occupied memory, and the duration of residence in memory. Alternatively, analysis can be made based on the reference relations of accessed pages to identify frequently shared files. According to recently accessed Uniform Resource locators (URLs), resources that are more frequently shared and accessed for more times recently have a higher priority.

When it is necessary to release memory resources, the release is performed according to the priority of the parsed data. For example, data that has a lower priority is released before data that has a higher priority.

For all resources, before data is obtained, judgment is made about whether there are already parsed corresponding resources. If so, the reference count is increased and parsed data is obtained and loaded directly. If there are no parsed corresponding resources, the browser requests the data, parses and loads the data, stores the parsed data, and increases the reference count.

With the increase or decrease of one resource reference, the corresponding priorities are re-defined. For example, the client may define low, middle, and high priorities for all resources.

When a page is unloaded, delayed unloading can be adopted. For example, when one browser window switches from one page to another page, resources that are referenced for 0 times are unloaded after a certain delay, such as 3 seconds. When the delay expires, if the resources are still not referenced, the resources are released. The adoption of delayed unloading also helps to increase the shared hit rate.

When a page is unloaded, the reference count of all resources on the page is reduced by 1 directly (instead of direct release of the resources) before the resources are released.

An exemplary resource release procedure includes:
1. Check all resources whose reference count is 0 and if the priority of such resources is the lowest, release the resources directly.
2. Check the current resource limit, and if occupied resources exceed the resource limit, release, according to the latest access sequence, the oldest resources whose priority is middle and whose reference count is 0 until the occupied resources are within the resource limit.
3. If all resources whose priority is middle and whose reference count is 0 are released but the occupied resources still exceed the resource limit, release, according to the latest access sequence, the oldest resources whose priority is high and whose reference count is 0 until the occupied resources are within the resource limit.
4. In the case of delayed unloading, for example, unloading of resources after a 3-second delay (the average loading time of a web page is within 3 seconds), when a page is unloaded, the reference count of resources concerned is first reduced by 1 and a 3-second timer is started.

When the timer expires, the resources are released by performing the above steps 1 to 3.

In the embodiment of the present invention, the method for identifying shared resources is to match and query resources by using the URL according to a resource type.

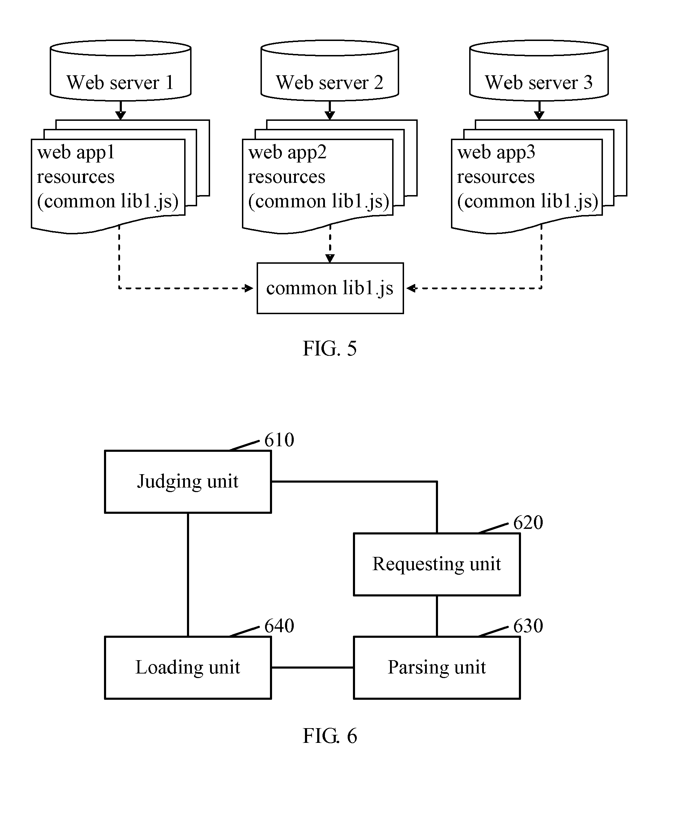

In addition, there are many universal JavaScript packages which can be used by different websites but are possibly distributed on different servers. These JavaScript packages have different URLs but the same content. As shown in FIG. 5, three web applications are deployed on three web servers and the three web applications reference lib1 of the same JavaScript library. In this case, an enhanced shared content identifying method can be adopted to provide inter-website sharing of similar content through uniform JavaScript package management. The method is as follows:
1. The name, version, date and author information of the package are described at the header of each JavaScript file by using a note, for example, in compliance with Doxygen grammar.
2. The browser first matches the filename by using the URL, then compares the name, version, date, and author information of a package with the parsed data to identify packages that have the same content, and shares the resources between such packages.

In addition, for more secure and more accurate judgment, the above method can be applied in combination with the following comparison:
3. The browser compares the edited date of the files (obtain the last edited date of the file from the HTTP header delivered by the web server). If the edited date is the same, the two packages are regarded as identical.
4. The browser scans the file and calculates the hash value. If the two files have the same hash value, the two packages are regarded as identical.

From the above description about the technical solution and benefits of the present invention, it is known that, in the embodiment of the present invention, the sharing of parsed data prevents repeated parsing of shared resources and thereby, shortens the loading time, increases the loading speed, and reduces the memory occupancy.

FIG. 6 illustrates the structure of a web page loading apparatus according to a first embodiment of the present invention. The page loading apparatus includes: a judging unit 610, a requesting unit 620, a parsing unit 630, and a loading unit 640.

The judging unit 610 is configured to judge whether there is already parsed data matching the resources to be loaded.

The judgment method is detailed in previous descriptions, for example, by using the ULR, or uniform JavaScript management, and therefore is not described here.

The requesting unit 620 is configured to request original resources to be loaded.

If no content is shared, pages are loaded by using a procedure according to the prior art. The client requests resource files from the server through web IO.

The parsing unit 630 is configured to parse the original resources to be loaded and generate parsed data of the original resources to be loaded.

The loading unit 640 is configured to load the parsed data if the judging unit 610 determines that there is parsed data matching the resources to be loaded, or load the parsed data generated by the parsing unit 630 if the judging unit 610 determines that there is no parsed data matching the resources to be loaded.

From the above description about the technical solution and benefits of the present invention, it is known that, in the embodiment of the present invention, the sharing of parsed data prevents repeated parsing of shared resources and thereby, shortens the loading time, increases the loading speed, and reduces the memory occupancy.

A web page loading apparatus in another embodiment of the present invention includes the judging unit, requesting unit, parsing unit, and loading unit in the previous embodiment and further, includes a storing unit, configured to store the parsed data generated by the parsing unit.

Storing the parsed data increases the amount of parsed data in the memory and thereby increases the shared hit rate.

In response to the method embodiments, to find a balance between the shared hit rate and the memory occupancy, the apparatus further includes: a managing unit, a prioritizing unit, and a releasing unit.

The managing unit is configured to manage the reference count of the parsed data by increasing the reference count of the parsed data after the loading unit loads the parsed data and reducing the reference count of the parsed data after the page is unloaded.

The prioritizing unit is configured to prioritize the parsed data.

In this embodiment of the present invention, the parsed data stored in the memory is prioritized, where different priorities are set based on the elements concerned. For example, the priority of parsed data may be set based on the number of references, the size of occupied memory, and the duration of residence in memory. Alternatively, analysis can be made based on the reference relations of accessed pages to identify frequently shared files. According to the recently accessed URLs, resources that are more frequently shared and accessed for more times recently have a higher priority.

The releasing unit is configured to release stored parsed data that has a low priority.

When it is necessary to release memory resources, the release is performed according to the priority of the parsed data. For example, data that has a lower priority is released before data that has a higher priority. To find an optimal balance between the shared hit rate and the memory occupancy, a reference count is adopted for the parsed data stored in the memory.

Through the sharing of parsed data, the embodiment of the present invention prevents repeated parsing of shared resources and thereby shortens the loading time, increases the loading speed, and reduces the memory occupancy.

The working principle and procedure of all units of the apparatus have been described in detail hereinbefore in the method embodiments and therefore are not described again.

Those skilled in the art understand that all or part of the steps in the above method according to the embodiments of the present invention can be implemented by hardware under the instruction of a program. The program can be stored in a computer readable storage medium, such as a Read Only Memory (ROM), a Random Access Memory (RAM), a magnetic disk, or a Compact Disk-Read Only Memory (CD-ROM).

Although the present invention has been described through some preferred embodiments, the invention is not limited to such embodiments. It is apparent that those skilled in the art can make various modifications and variations to the invention without departing from the spirit and scope of the present invention. The invention is intended to cover the modifications and variations provided that they fall within the scope of protection defined by the claims or their equivalents.

## Claims

1. A web page loading method, comprising:
judging whether there is parsed data matching resources to be loaded; and
if there is parsed data matching the resources to be loaded, loading the parsed data directly.

2. The method of claim 1, further comprising:
if there is no parsed data matching the resources to be loaded, requesting original resources to be loaded, parsing the original resources to be loaded, generating parsed data matching the original resources to be loaded, and loading the parsed data.

3. The method of claim 2, after the generating the parsed data matching the original resources to be loaded, further comprising:
storing the parsed data.

4. The method of claim 3, after loading the parsed data, further comprising:
increasing a reference count of the parsed data.

5. The method of claim 4, further comprising:
reducing the reference count of the parsed data after the web page is unloaded.

6. The method of claim 5, after storing the parsed data, further comprising:
prioritizing the parsed data.

7. The method of claim 6, wherein the prioritizing the parsed data comprises:
prioritizing the parsed data according to the reference count of the parsed data.

8. The method of claim 6, further comprising:
releasing stored parsed data that has a low priority.

9. The method of claim 8, wherein the releasing the stored parsed data that has a low priority comprises:
releasing the stored parsed data that has a low priority after a predetermined delay.

10. The method of claim 1, wherein the judging whether there is parsed data matching the resources to be loaded comprises:
matching and querying resources based on a Uniform Resource Locator (URL) and judging whether there is parsed data matching the resources to be loaded.

11. The method of claim 1, wherein the step of judging whether there is parsed data matching the resources to be loaded comprises:
matching and querying resources based on the name, version, date, and author information of a software package to identify parsed data matching the resources to be loaded.

12. The method of claim 1, wherein the step of judging whether there is parsed data matching the resources to be loaded comprises:
matching filenames by using a Uniform Resource Locator (URL) and then comparing the name, version, date, and author information of a software package to identify parsed data matching the resources to be loaded.

13. The method of claim 1, wherein the step of judging whether there is parsed data matching the resources to be loaded comprises:
matching and querying resources based on the name, version, date, and author information of software packages and comparing the edited date of files to identify parsed data matching the resources to be loaded.

14. The method of claim 1, wherein the step of judging whether there is parsed data matching the resources to be loaded comprises:
matching and querying resources based on the name, version, date, and author information of a software package, scanning the files and calculating hash values, and comparing whether the hash values match to identifying parsed data matching the resources to be loaded.

15. The method of any of claims 1-14, wherein the resources comprise:
Hypetext Markup Language (HTML) file, script language file, picture, JavaScript Object Notation (JSON) file, Extensible Markup Language (XML) text, and/or Cascading Style Sheet (CSS) file.

16. A web page loading apparatus, comprising:
a judging unit, configured to judge whether there is parsed data matching resources to be loaded; and
a loading unit, configured to load the parsed data when the judging unit determines that there is parsed data matching the resources to be loaded.

17. The apparatus of claim 11, further comprising:
a requesting unit, configured to request original resources to be loaded when the judging unit determines that there is no parsed data matching the resources to be loaded;
a parsing unit, configured to parse the original resources to be loaded and generate parsed data matching the original resources to be loaded; and
the loading unit, further configured to load the parsed data generated by the parsing unit when the judging unit determines that there is no parsed data matching the resources to be loaded.

18. The apparatus of claim 17, further comprising:
a storing unit, configured to store the parsed data generated by the parsing unit.

19. The apparatus of claim 18, further comprising:
a managing unit, configured to manage a reference count of the parsed data by increasing the reference count of the parsed data after the loading unit loads the parsed data and reducing the reference count of the parsed data after the page is unloaded.

20. The apparatus of claim 19, further comprising:
a prioritizing unit, configured to prioritize the parsed data.

21. The apparatus of claim 20, further comprising:
a releasing unit, configured to release stored parsed data that has a low priority.

22. The apparatus of any one of claims 16-121, wherein the resources comprise:
Hypertext Markup Language (HTML) file, script language file, picture, JavaScript Object Notation (JSON) file, Extensible Markup Language (XML) text, and/or Cascading Style Sheet (CSS) file.
